# EUROPEAN PATENT APPLICATION

(11) **EP 1 241 891 A1**
(43) Date of publication of application: **18.09.2002**
(21) Application number: 01106133.0
(22) Date of filing: 13.03.2001
(51) Int. Cl.: H04N 7/24

(54) **Apparatus and method for transmitting audio and/or video data**

(71) Applicant: eJay AG, 70178 Stuttgart (DE)
(72) Inventor: Schmitz, Helmut, 73230 Kirchheim/Teck-Jesingen (DE)
(74) Representative: Grünecker, Kinkeldey, Stockmair & Schwanhäusser Anwaltssozietät

(57) **Abstract**

The invention provides an apparatus for transmitting audio and/or video data to receiving means, comprising means for determining the type of the receiving means; means for compressing the audio and/or video data with a compression algorithm corresponding to the determined type of the receiving means; and means for transmitting the compressed audio and/or video data to the receiving means. The invention further provides a method for transmitting audio and/or video data, comprising the steps of determining the generic type of a receiving means; compressing the audio and/or video data with a compression algorithm corresponding to the determined type of the receiving means; and transmitting the compressed audio and/or video data to the receiving means.

## Description

### Field of the Invention

The invention relates to apparatus and methods for transmitting audio and/or video data. Particularly, the invention relates to transmitting compressed audio and/or video data.

### Prior Art

It is well known in the art to compress audio and/or video data before transmitting such data. In particular, in the field of e-commerce it became recently quite popular to order audio and/or video data files via Internet. These audio and/or video data files are generally stored in data bases of a provider, which data bases can be accessed by a consumer via Internet and the provider's computer (server). Since the audio and/or video files are generally quite large, such files are compressed on the provider's computer before they are transmitted to a consumer. To compress audio and/or video data, a variety of compression algorithms are well known in the art, for example the different MPEG standards. Only due to such compression, audio and/or video data can be transmitted from the provider's server to the consumer's computer within a time accepted by consumers.

Furthermore, recently it became possible to access the Internet not only via computers but also via other devices such as portable telephones, and the like. Also in the field of wireless transmission, compression algorithms are used, for example for transmitting data to a portable telephone. The present apparatus and methods for transmitting audio and/or video data from the providers' computers (servers), however, are not capable of transmitting audio and/or video files to such receiving devices within a time accepted by consumers, since the compressed files are still too large for being transmitted.

In view of this, the objective problem underlying the invention is to provide apparatus and methods which enables a provider to transmit audio and/or video data files to different receiving devices, particularly to consumers' computers via Internet or to consumers' portable telephones or set-top-box via Internet and a wireless network within a time and a quality which is accepted by consumers.

### Description of the Invention

This objective problem is solved by an apparatus for transmitting audio and/or video data to receiving means, comprising means for determining the type of the receiving means; means for compressing the audio and/or video data with a compression algorithm corresponding to the determined type of the receiving means; and means for transmitting the compressed audio and/or video data to the receiving means.

Since the apparatus for transmitting audio and/or video data of the invention determines the type of the receiving means, and uses a compression algorithm which corresponds to the receiving means, or in other words which is optimized with respect to receiving means, the invention enables providers to transmit audio and/or video data files - independently of the type of the receiving device - to consumers within a time and with a quality which is accepted by consumers.

According to a preferred embodiment of the invention, the means for determining can determine between at least two different types of receiving means, and the compressing means are to compress audio and/or video data with one compression algorithm of at least two different compression algorithms, each compression algorithm corresponding to a determined type of receiving means.

In this embodiment, for each different type of receiving means, the apparatus comprises a different compression algorithm which is optimized with respect to the receiving means.

Preferably, the above discussed apparatus of the invention can be adapted to determine between different generic types of receiving means such as computer, hifi receiver, portable telephone, car hifi receiver, set-top-box, TV receiver and the like.

Alternatively and additionally, the above discussed apparatus can be adapted to determine between different models of one generic type of receiving means such as between different hifi receiver, between different portable telephones, between different car hifi receivers, between different set-top-boxes, between different TV receivers and the like. In this embodiment also an optimization for different models of one generic type or an optimization for different generic types and different models for the generic types can be established. This embodiment is of advantage when the receiving means of one generic type are not standardized, particularly, when different model types of one generic type use different decompression algorithms.

Preferably, the means for transmitting the compressed audio and/or video data are to transmit the data via Internet, Intranet and/or a wireless network. Of course, also other sources for transmitting can be used.

In accordance with a preferred embodiment, the means for compressing the audio and/or video data can compress the data with different compression rates for different types of receiving means. Thus, an optimization with respect to short transmitting time and quality of compressed data can be obtained.

Further, also the means for transmitting the audio and/or video data can transmit the data with different transmitting rates for different types of receiving means. In this embodiment, adapting to transmitting rates of different receiving devices can be easily obtained.

Preferably, the apparatus of the invention may comprise means for selecting a compression rate and a transmitting rate such that the time for transmitting is minimized on the one hand and the quality of the compressed data is maximized on the other hand. Such means may set both rates automatically or give the operator of the receiving device the option to select specific rates for his/her needs, for example one user might accept a longer transmission for a higher quality of the data, whereas another user might prefer shorter transmission times and accept a lower quality of the data.

The above objective problem is also solved by a method for transmitting audio and/or video data, comprising the steps of determining the generic type of a receiving means; compressing the audio and/or video data with a compression algorithm corresponding to the determined type of the receiving means; and transmitting the compressed audio and/or video data to the receiving means.

This method can be further developed such that determining is performed between at least two different types of receiving means, and compressing audio and/or video data is performed with one of at least two different compression algorithms, each algorithm depending on the determined type of receiving means.

In this context, the at least two different types may comprise different generic types such as computer, hifi receiver, portable telephone, car hifi receiver, set-top-box, and TV receiver and/or different model types of one generic type, as already discussed above.

Preferably, the compressed audio and/or video data may be transmitted via Internet, Intranet, and/or a wireless network.

In the above discussed methods the audio and/or video data may be compressed with different compression rates for different types of the receiving means.

Additionally or alternatively, in the above discussed methods the audio and/or video data may be transmitted with different transmitting rates for different types of the receiving means.

Further, compression rate and transmitting rate may be selected such that the time for transmitting is minimized and the quality of the compressed data is maximized.

With respect to the advantages of the different above discussed embodiments of the methods of the invention, reference is made to the discussion of the corresponding apparatus claims.

### Detailed Description of the Invention

In the following a specific example of an apparatus and method for transmitting audio and/or video data to receiving means of the invention is given.

In this example, the apparatus of the invention comprises means for determining the type of the receiving means. This means for determining requests from the receiving means a signal which indicates the generic type of the receiving means. This signal can be sent from the receiving means automatically upon demand or may be input by the consumer (i.e. operator of the receiving means.)

Upon receipt of this signal, the means for determining can discriminate between a variety of different generic types of receiving means. Whereas, in this example, only a discrimination between different generic types of receiving means is made, this is not to be understood as a limitation. As a matter of fact, also a discrimination can be made between different models of one generic type, or a combination of both alternatives, i.e., different generic types and different model types within one generic type.

In this example, a discrimination can be made between a consumer's computer and a consumer's portable telephone. Also this is not to be understood as limiting; indeed a variety of different generic types of receiving means may be employed, for example hifi receiver, car hifi receiver, set-top-box, and/or TV receiver.

Furthermore, the apparatus also comprises means for compressing the audio and/or video data with a compression algorithm corresponding to the determined type of the receiving means.

If it is determined in this example that the receiving means is a computer, then a conventional compression algorithm, such as MPEG compression will be used. Such a compression ensures an acceptable time for transmission as well as a very high quality of the compressed data, i.e., there is hardly any loss in quality (with respect to the original data on the providers' apparatus) when the data are decompressed on the consumers' computers.

Should the receiving means be a portable telephone, then a compression algorithm is used which takes into account that the amount of data which can be received by a portable telephone (in the same time) is significantly smaller. In other words, a compression algorithm is used which has a higher compression rate than the MPEG compression resulting in a lower quality of the compressed data. However, these data can be transferred in a time which is acceptable for the consumers. The invention uses the ??? compression algorithm which is well known in the field of wireless transmitting data, for example to portable telephones.

Both compression algorithms can be implemented in the apparatus in form of software and/or hardware.

After compression the compressed audio and/or video data are transmitted to the receiving means which comprises a decompression algorithm (also in form of software and/or hardware) to decompress the audio and/or video data and make the data available to the consumers.

In view of this, and in contrast to a transmission with an MPEG compression, with the invention it is possible to transmit audio and/or video data also to a portable telephone within a time which is acceptable to consumers.

Whereas in the above example, the MPEG compression and the ACC compression is used, this is not to be understood as limiting. As a matter of fact, all known compression algorithms can be used as long as it is ensured that a compromise between quality of the decompressed audio and/or video data and a transmission time being acceptable for consumers is obtained.

## Claims

1. Apparatus for transmitting audio and/or video data to receiving means, comprising
means for determining the type of the receiving means;
means for compressing the audio and/or video data with a compression algorithm corresponding to the determined type of the receiving means; and
means for transmitting the compressed audio and/or video data to the receiving means.

2. Apparatus according to claim 1, wherein the means for determining are to determine between at least two different types of receiving means, and the compressing means are to compress audio and/or video data with a compression algorithm of at least two different compression algorithms, each compression algorithm corresponding to a determined type of receiving means.

3. Apparatus according to claim 2, wherein the at least two different types comprise different generic types such as computer, hifi receiver, portable telephone, car hifi receiver, set-top-box, and TV receiver and/or different model types of one generic type.

4. Apparatus according to any one of claims 1 to 3, wherein the means for transmitting the compressed audio and/or video data are to transmit the data via Internet, Intranet and/or a wireless network.

5. Apparatus according to any one of claims 1 to 4, wherein the means for compressing the audio and/or video data are to compress the data with different compression rates for different types of receiving means.

6. Apparatus according to any one of claims 1 to 5, wherein the means for transmitting the audio and/or video data are to transmit the data with different transmitting rates for different types of receiving means.

7. Apparatus according to claim 6 in combination with claim 5, comprising means for selecting a compression rate and a transmitting rate such that the time for transmitting is minimized and the quality of the compressed data is maximized.

8. Method for transmitting audio and/or video data, comprising
determining the generic type of a receiving means;
compressing the audio and/or video data with a compression algorithm corresponding to the determined type of the receiving means; and
transmitting the compressed audio and/or video data to the receiving means.

9. Method according to claim 8, wherein determining is performed between at least two different types of receiving means, and compressing audio and/or video data is performed with one of at least two different compression algorithms, each algorithm depending on the determined type of receiving means.

10. Method according to claim 9, wherein the at least two different types comprises different generic types such as computer, hifi receiver, portable telephone, car hifi receiver, set-top-box, and TV receiver and/or different model types of one generic type.

11. Method according to any one of claims 8 to 10, wherein the compressed audio and/or video data are transmitted via Internet, Intranet, and/or a wireless network.

12. Method according to any one of claims 8 to 11, wherein the audio and/or video data are compressed with different compression rates for different types of the receiving means.

13. Method according to any one of claims 8 to 12, wherein the audio and/or video data are transmitted with different transmitting rates for different types of the receiving means.

14. Method according to claim 13 in combination with claim 12, wherein a compression rate and a transmitting rate is selected such that the time for transmitting is minimized and the quality of the compressed data is maximized.
